# EUROPEAN PATENT SPECIFICATION

(11) **EP 4 517 128 B1**
(45) Date of publication and mention of the grant of the patent: **08.04.2026**
(21) Application number: 23193777.2
(22) Date of filing: 28.08.2023
(51) Int. Cl.: F16F 7/08, F16F 7/09, D06F 37/20

(54) **A MODULAR FRICTIONAL DAMPER**
MODULARER REIBUNGSDÄMPFER
AMORTISSEUR À FRICTION MODULAIRE

(43) Date of publication of application: 05.03.2025
(73) Proprietor: Aksistem Elektromekanik Sanayi ve Ticaret Ltd. Sti., Cerkezkoy/Tekirdag (TR)
(72) Inventor: KANIOZ, Can, Tekirdag (TR)
(74) Representative: Genç Ilhan, Oznur

(56) References cited:
- GB-A- 2 092 261
- JP-B1- 6 340 109
- KR-B1- 101 286 703
- US-A1- 2017 044 980

## Description

### Technical Field of the Invention

The present invention relates to a frictional damper, in other words, a frictional shock absorber for washing or drying machines having rotating drums.

### Background of the Invention

When a washing or drying machine goes through various cycles, such as spinning or agitating, it can generate significant vibrations and movement. These vibrations can not only create noise but also cause the machine to shift or move around. This can cause a damage or other inconveniences.

Dampers (also known as shock absorbers or washing machine suspension legs) help to mitigate these issues by absorbing and dampening the vibrations and shocks. Washing machine or drying machine dampers absorb drum movements, dissipate energy and reduce the impact of the machine's movements on its surroundings.

For this reason, drums in washing or drying machines play a crucial role in stabilizing the machine, minimizing noise, and preventing excessive movement during operation.

In the state of the art, dampers comprise a tubular hollow body and a rod which can reciprocate inside the hollow body. A seat positioned on an open end of the hollow body comprises a cylindrical friction member which encircles the rod of the damper. During the reciprocating motion, the rod comes into contact with the cylindrical friction member and dissipates its energy. This energy dissipation is influenced by the tightness of the grip between the cylindrical friction member and the rod, essentially determined by inner radius of the friction member. However, the relationship between the generated friction force (the energy dissipation) and the radius of the friction member exhibits a wide tolerance range, often around ±20% or even higher.

Document GB 2 092 261 A discloses a prior-art friction damper device according to the preamble of claim 1.

Documents US 2017/044980 A1 and JP 6 340109 B1 also disclose prior-art friction damper devices.

For example, aiming to create a damper with a 100N friction force could result in a damper actually exhibiting 80N or 120N of friction force due to the mentioned wide tolerance range. In a typical washing machine, there are usually 2-5 dampers present. Using dampers in a washing machine with varying energy absorptions can lead to vibrations that cause unwanted noise. Adjusting the energy absorption of a damper necessitates changing the cylindrical friction member and/or the seat with another one. Yet, even with this change, there's no assurance of achieving the desired energy absorption level for the damper.

Furthermore, the inability to adjust the friction force of conventional washing machine dampers cause to store dampers with varying friction forces which significantly increases the burden of storage costs.

Moreover, in the state of the art, the cylindrical friction member is installed to the seat from a top of the seat. This requires a retaining clip to secure the cylindrical friction member inside the seat. However, retainer clips are not reliable under excessive force and heat resulting that the retainer clip pops up from its slot.

Furthermore, in the state of the art, the cylindrical friction member is mounted into the seat from the top of the seat. This installation method necessitates the use of a retaining clip to keep the cylindrical friction member securely in the seat. Unfortunately, retaining clips are unreliable when subjected to excessive force and heat which may lead to dislodge the retainer clip from its designated slot.

Since the aforementioned drawbacks of the known washing machine dampers, there is need for a damper permiting the adjustment or calibration of damping force.

### Brief Description of the Drawings

The accompanying drawings are given solely for the purpose of exemplifying an embodiment of the invention which will be explained in detail hereinafter:
**Figure 1** is a perspective view of the friction damper wherein the pressure elements are mounted from an outside surface of the seat, in one exemplary embodiment of the present invention.
**Figure 2** is a front cross-sectional view of the friction damper wherein the pressure elements have upper retainer protrusions as in Fig. 1, in one exemplary embodiment of the present invention.
**Figure 3** is an exploded view of the friction damper as in Fig. 1 and Fig. 2 without the damping rod, in one exemplary embodiment of the present invention.
**Figure 4** is a perspective view of the friction damper as in Fig. 1-3 without the damping rod, in one exemplary embodiment of the present invention.
**Figure 5** is a perspective view of the pressure element with the upper retainer protrusion, in one exemplary embodiment of the present invention.
**Figure 6** is a perspective view of the pressure elements with the upper retainer protrusions engaged with the friction member, in one exemplary embodiment of the present invention.
**Figure 7** is a top view of Fig. 6, in one exemplary embodiment of the present invention.
**Figure 8** is a perspective view of the friction damper wherein the pressure elements comprise external fastening means, specifically comprises cantilevers engaged with the fins of the seat, in another exemplary embodiment of the present invention.
**Figure 9** is an exploded view of the friction damper as in Fig. 8 without the damping rod, in one exemplary embodiment of the present invention.
**Figure 10** is a top view of the pressure element with the upper retainer protrusion and cantilevers, in one exemplary embodiment of the present invention.
**Figure 11** is perspective view of the pressure element as in Fig. 10, in one exemplary embodiment of the present invention.
**Figure 12** is a perspective view of the pressure elements with the upper retainer protrusions and cantilevers engaged with the friction member, in one exemplary embodiment of the present invention.
**Figure 13** is a top view of Fig. 12, in one exemplary embodiment of the present invention.
**Figure 14** is a perspective view of the friction damper wherein the pressure elements comprise the internal fastening means and an upper retainer protrusion, in another exemplary embodiment of the present invention.
**Figure 15** is a front cross-sectional view of the friction damper as in Fig. 14, in one exemplary embodiment of the present invention.
**Figure 16** is an exploded view of the friction damper as in Fig. 14 without the damping rod, in one exemplary embodiment of the present invention.
**Figure 17** is an exploded view of the pressure elements with the upper retainer protrusion engaged with the friction member wherein the pressure elements are fixed each other, in one exemplary embodiment of the present invention.
**Figure 18** is a perspective view of the pressure element with the upper retainer protrusion, settling pins and pin holes, in one exemplary embodiment of the present invention.
**Figure 19** is a perspective view of the pressure elements with the upper retainer protrusion engaged with the friction member wherein the pressure elements are fixed each other, in one exemplary embodiment of the present invention.
**Figure 20** is a perspective view of the friction damper wherein the pressure elements comprise the internal fastening means, an upper retainer protrusion and also lower retainer protrusion, in another exemplary embodiment of the present invention.
**Figure 21** is an exploded view of the friction damper as in Fig. 20 without the damping rod, in one exemplary embodiment of the present invention.
**Figure 22** is an exploded view of the pressure elements with the upper retainer protrusion and the lower retainer protrusion engaged with the friction member wherein the pressure elements are fixed each other, in one exemplary embodiment of the present invention.
**Figure 23** is a perspective view of the pressure element with the upper retainer protrusion, the lower retainer protrusion, settling pins and pin holes, in one exemplary embodiment of the present invention.
**Figure 24** is a perspective view of the pressure elements with the upper retainer protrusion and the lower retainer protrusion engaged with the friction member wherein the pressure elements are fixed each other, in one exemplary embodiment of the present invention.
**Figure 25** is a side view of the Fig. 24, in one exemplary embodiment of the present invention.

The elements illustrated in the figures are numbered as follows:
100. Friction damper
   110. Hollow body
   120. Damping rod
200. Seat
   210. Inlet
   220. Rod opening
   230. Fins
300. Friction member
400. Pressure element
   411. Upper retainer protrusion
   412. Lower retainer protrusion
   420. Cantilever
   430. Settling pin
   440. Pin hole
   450. Force application hole
500. Anchoring member
Y. Damping rod axis
X. X axis

### Detailed Description of the Invention

Embodiments of the present invention relates to a friction damper (100) suitable for washing machines or drying machines. The friction damper (100) comprises a tubular hollow body (110) and a damping rod (120) arranged coaxially with respect to one another for moving along each other telescopically. The damping rod (120) has an outer diameter less than an inner diameter of the hollow body (110). So, the damping rod (120) can perform a telescopic motion within the hollow body (110).

The hollow body (110) comprises a seat (200) for housing a friction member (300). The damping rod (120) is slidably coupled to the friction member (300) for generating a friction force onto the damping rod (120). The friction member (300) is adapted to be stationary within the seat (200) and the damping rod (120) is frictionally (so as to create a friction) slidable over the friction member (300).

The seat (200) has at least two opposing inlets (210). Each inlet (210) is for receiving at least one pressure element (400). The friction member (300) is adapted for being positioned between the pressure element (400). The pressure elements (400) are slidable within the inlet (210). The pressure elements (400) are also fixable at various positions within the inlet (210). The pressure elements (400) exert pressure to the friction member (300) at an adjustable level according to an adjustable distance between the pressure elements (400).

The spacing/the distance between the pressure elements (400) can be adjustable or modifiable. The closeness of one pressure element (400) to another directly influences the magnitude of the applied pressure force on the friction member (300). As the distance between the pressure elements (400) decreases, the exerted pressure increases. This pressure applied by the pressure elements (400) compresses the friction member (300). The pressure elements (400) may compress the friction member (300) from its (the friction member (300)) sides. As this exerted pressure increases, the resultant frictional force applied to the damping rod (120) also increases. In simpler terms, reducing the distance between the pressure elements (400) leads to a greater frictional force being generated.

With the embodiment of the invention the tolerance range of the friction damper (100) regarding friction force is around ±1% or lower. Additionally, the friction force of the friction damper (100) is completely customizable which significantly reduce the storage costs.

In embodiments of the invention, an interior surface of the friction member (300) may match with an exterior surface the damping rod (120). In an exemplary embodiment of the invention, the damping rod (120) has a cylindrical exterior surface and the friction member (300) has also a concave interior surface or cylindrical interior surface. In an exemplary embodiment of the invention, the friction member (300) is in the form of a ring.

In an exemplary embodiment of the invention, the friction damper (100) may comprise an anchoring member (500) for fastening the friction damper (100) to a washing or drying machine.

In one embodiment of the invention, the inlets (210) are accessible from an outside surface of the seat (200). In this embodiment, the inlet (210) provides an access to the friction member (300) from an outside surface of the seat (200). The inlet (210) provides a pathway from the outer surface of the seat (200) to the friction member (300) for the pressure element (400). This inlet (210) lets the pressure element (400) to be inserted or mounted into the inlet (210) from an outside surface of the seat (200). In this way, the pressure element (400) can be slid into the inlet (210) from an outside surface of the seat (200). Furthermore, each pressure element (400) can be fixed to a selected position within the inlet (210) which also determines the distance between the pressure elements (400) for this embodiment. The selected position of the pressure element (400) within the inlet (210) determines the exerted pressure of the pressure element (400) to the friction member (300). The slidable pressure element (400) allows stepless position adjustment of the pressure element (400) within the inlet (210).

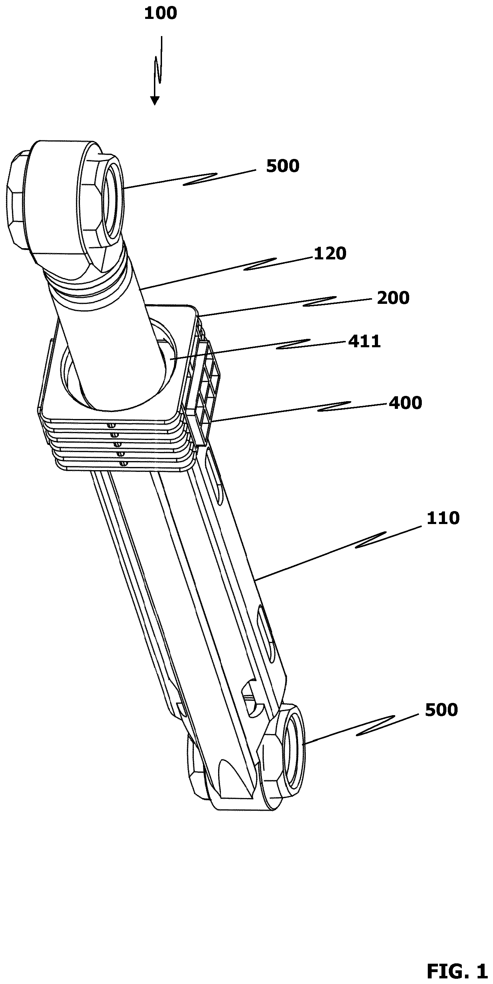

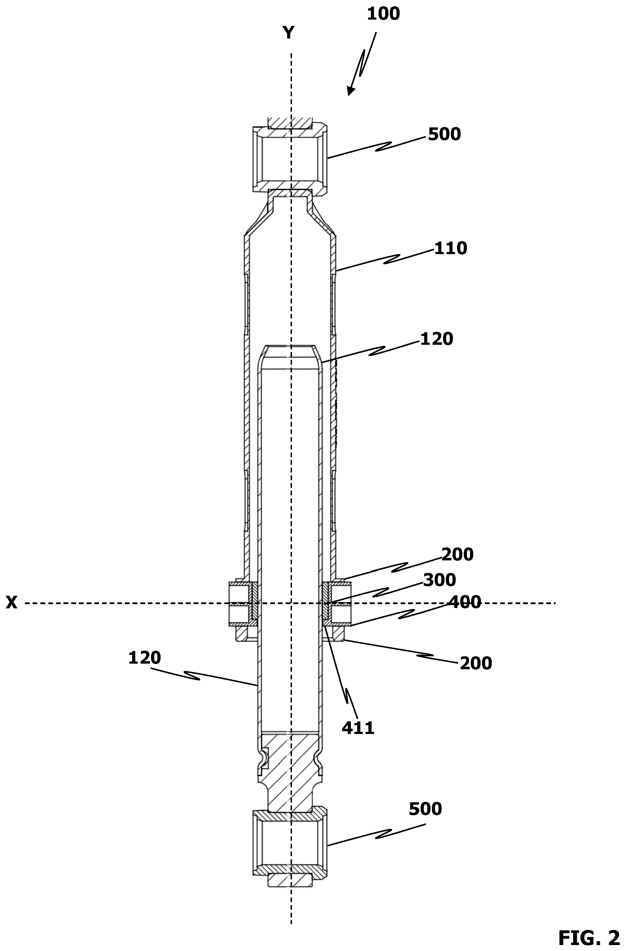

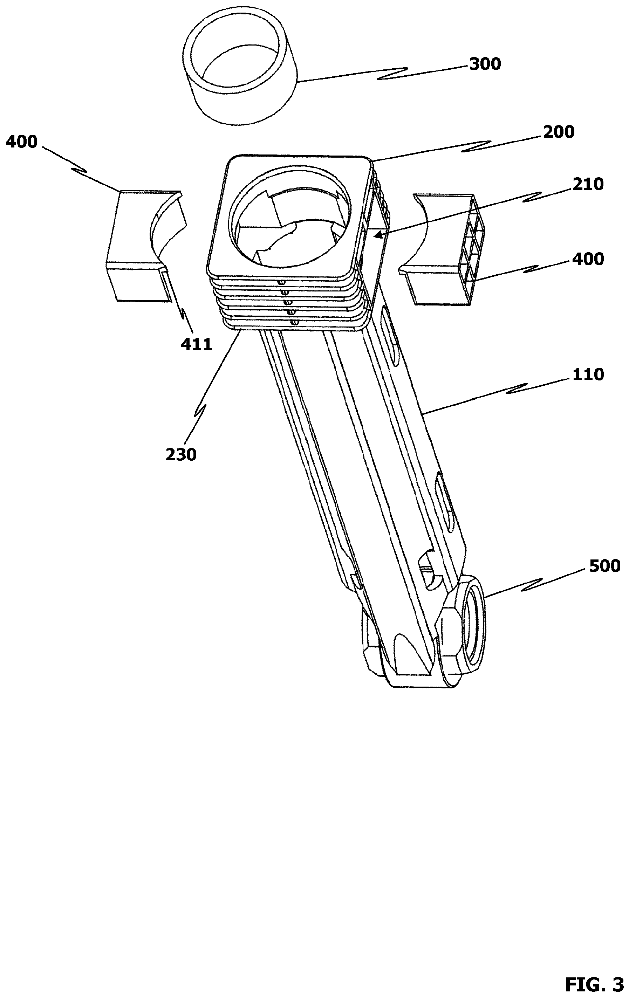

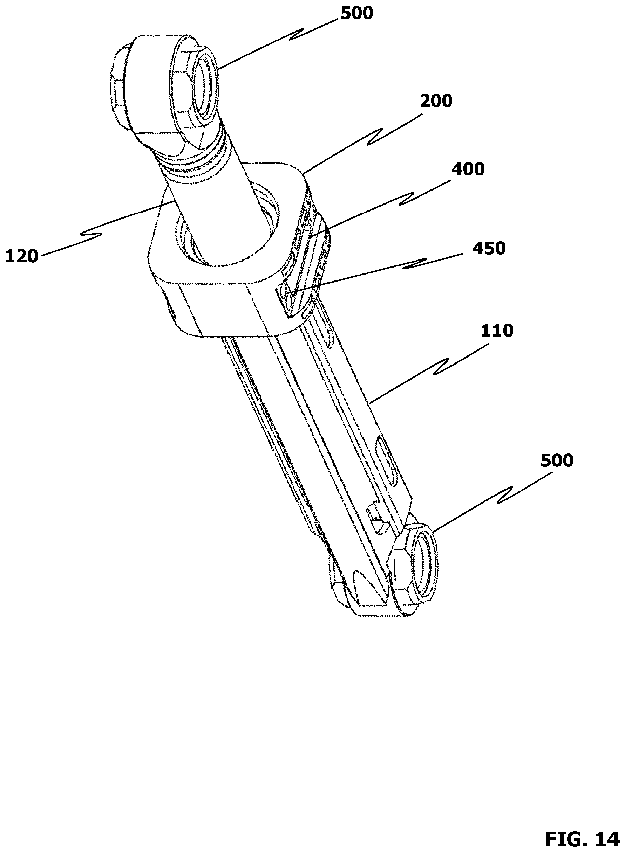

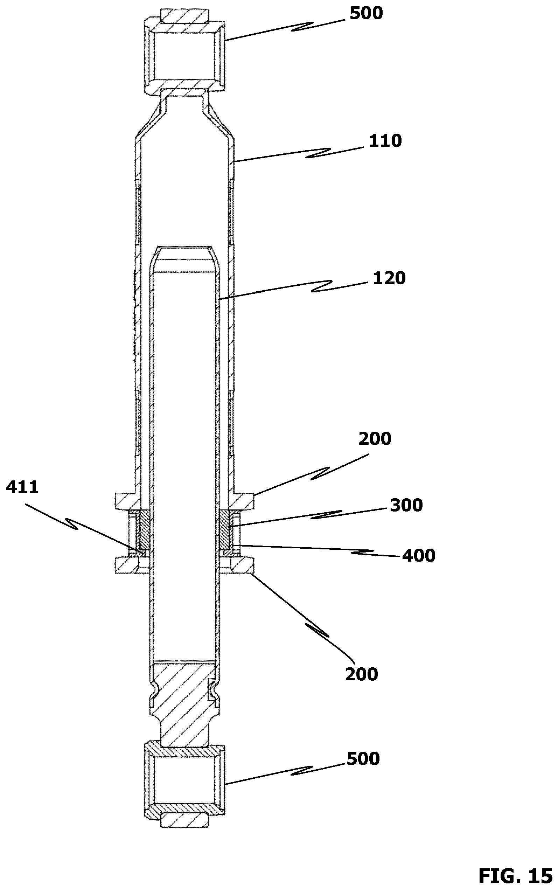

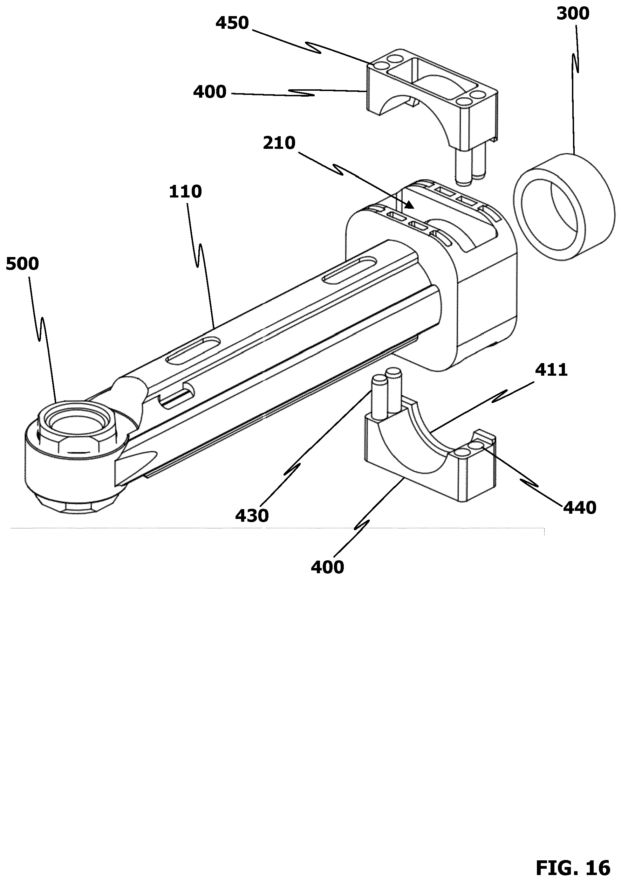

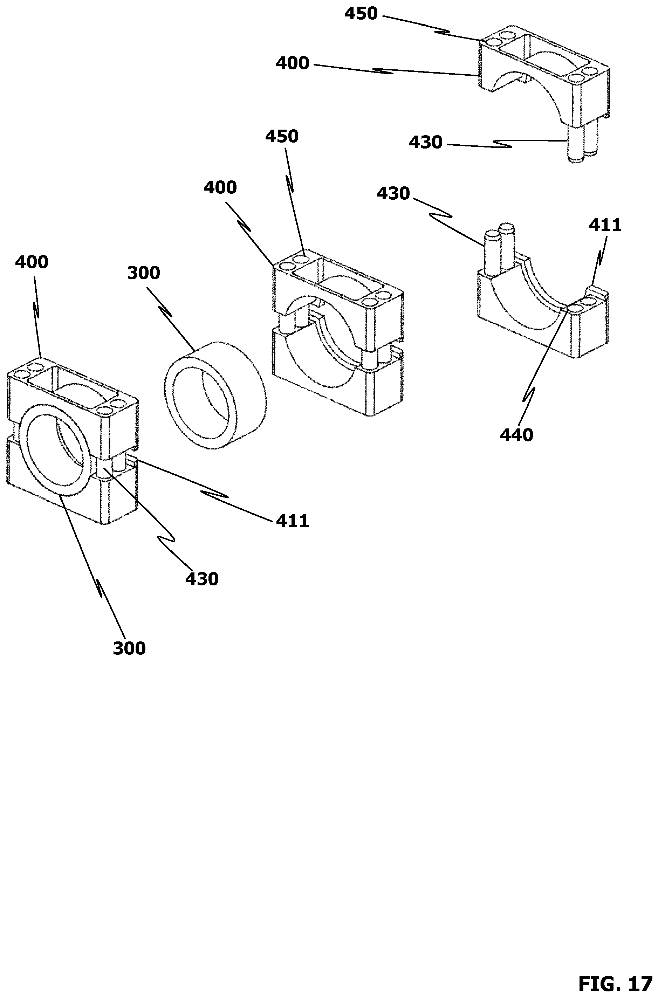

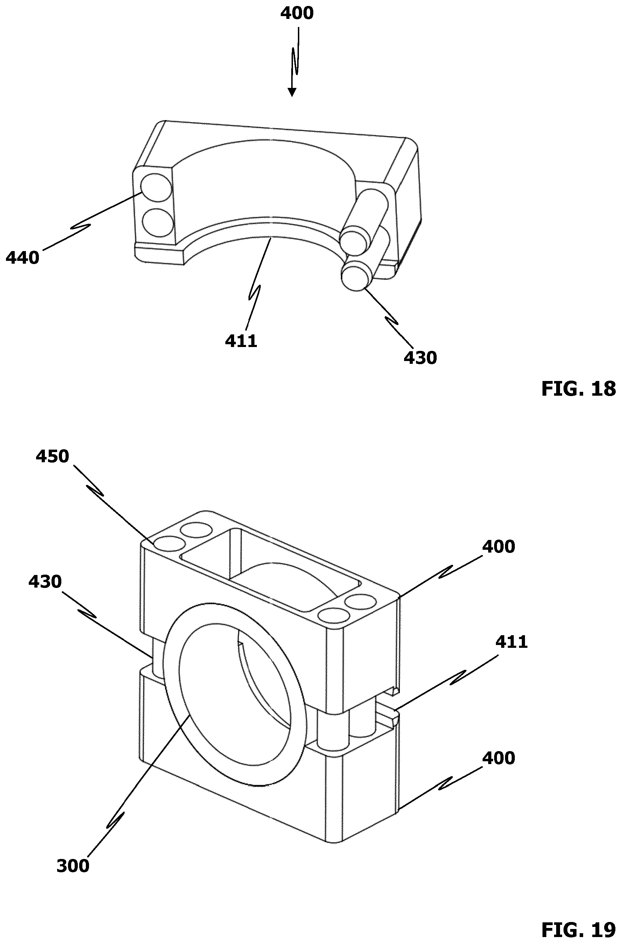

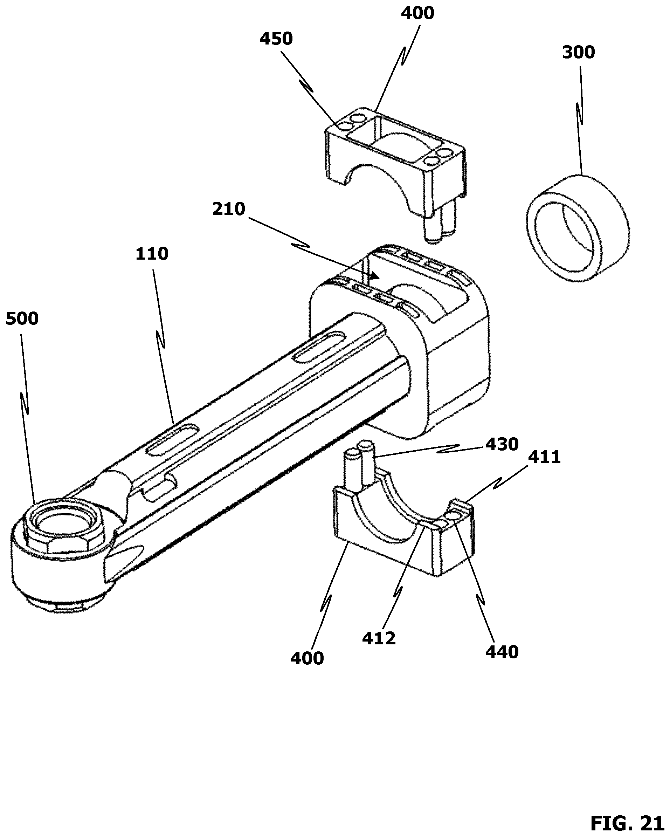

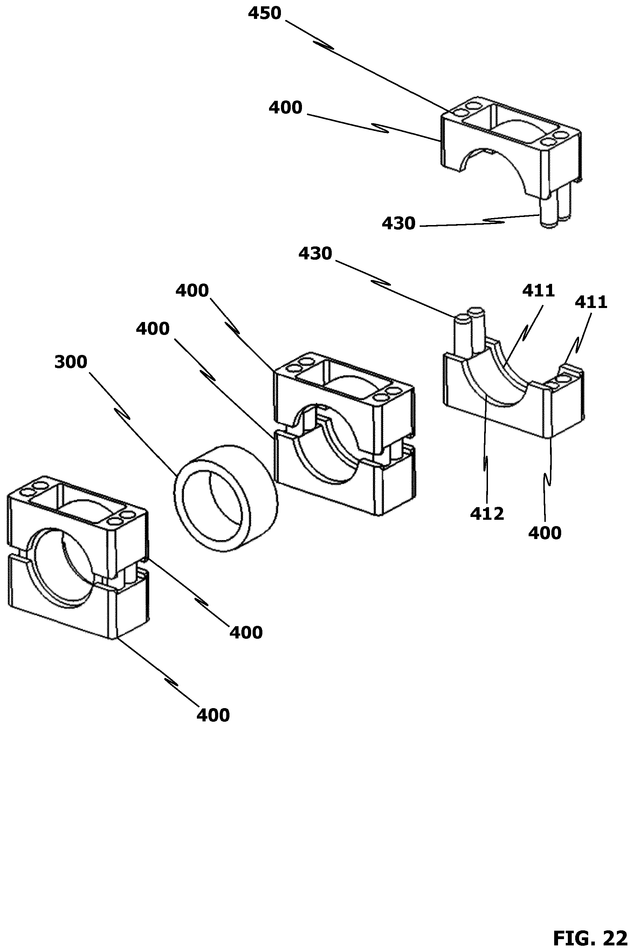

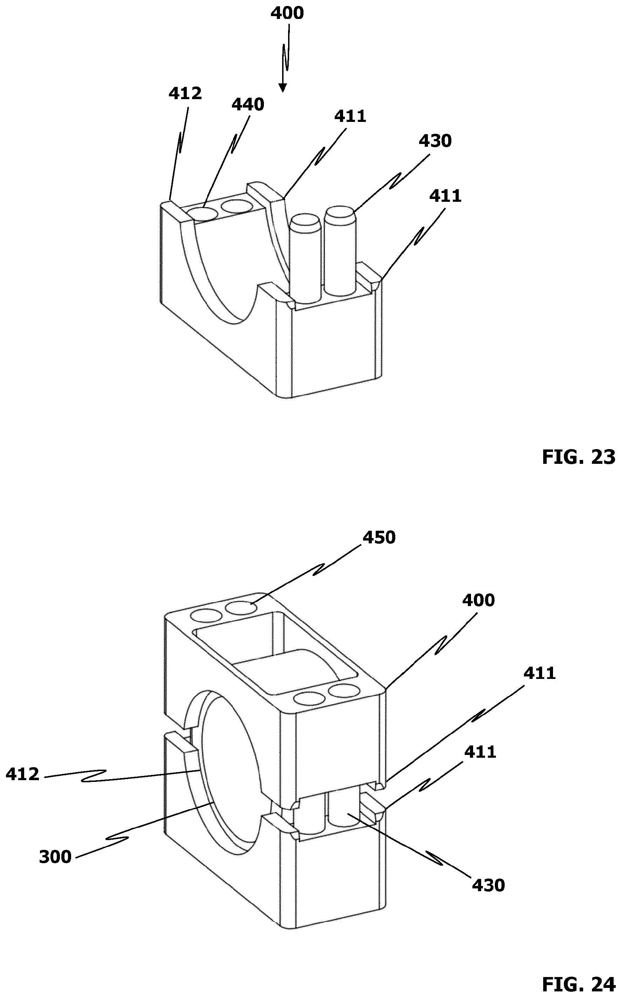

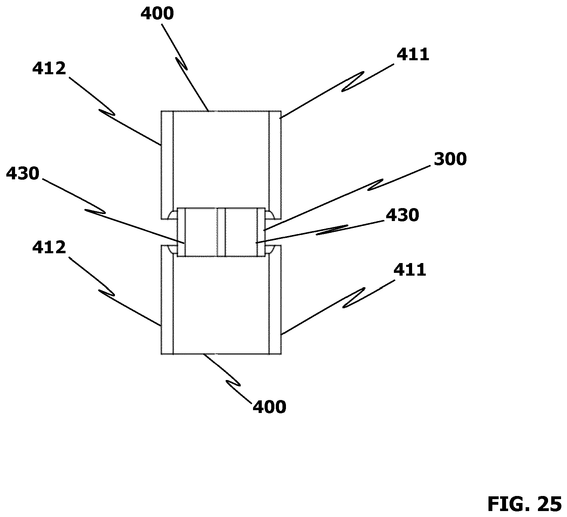

In embodiments of the invention, the friction damper (100) may be top loaded and/or side loaded. In top loaded embodiments, the friction member (300) is installed to the seat (200) from the top of the seat (200) (see Fig. 1-3). The top of the seat (200) comprises a rod opening (220) for receiving the damping rod (120). This rod opening (220) is also allows the friction member (300) to be installed into the seat (200) for top loaded embodiments. In embodiments of the friction dampers (100) which are top loaded may comprises a seat (200) having a countered inner wall. The counter of the countered inner wall is match with an outer counter of the friction member (300). This facilitates to restrict the movement of the friction member (300) along X (X) axis which is orthogonal to a damping rod axis (Y). The damping rod axis (Y) is the axis pass thought the hollow body (110) and the damping rod (120) (see Fig. 2). In side loaded embodiments, the friction member (300) is installed to the seat (200) from the side of the seat (200) (see Fig. 14-25). The inlet (210) both allows the friction member (300) to be installed into the seat (200) and the pressure element (400) to be installed into the inlet (210).

In embodiments of the invention, the exerted pressure of the pressure elements (400) to the friction member (300) is enough to restrict the movement of the friction member (300) along the damping rod axis (Y). However, some improvements may be incorporated into the invention to further ensure to restrict the movement of the friction member (300) along the damping rod axis (Y). These improvements may be as the following embodiments:
In one embodiment of the invention, the seat (200) comprises a rod opening (220) for receiving the damping rod (120) has a diameter less than an outer diameter of the friction member (300). In this embodiment, the friction damper (100) is a side loaded friction damper (100). The movement of the friction member (300) is securely restricted along the damping rod axis (Y). In this embodiment, the friction member (300) is secured inside the seat (200), in between the hollow body (110) and an envelope/perimeter of the rod opening (220) or in between a base of the seat (200) and an envelope/perimeter of the rod opening (220). In this embodiment, from the lower surface, the friction member (300) abuts onto an end of the hollow body (110) or a base of the seat (200). From an upper surface, the friction member (300) abuts onto the envelope/perimeter of the rod opening (220). The base of the seat (200) may be defined as an inner surface the seat (200) close to the hollow body (110) where the friction member (300) is located.

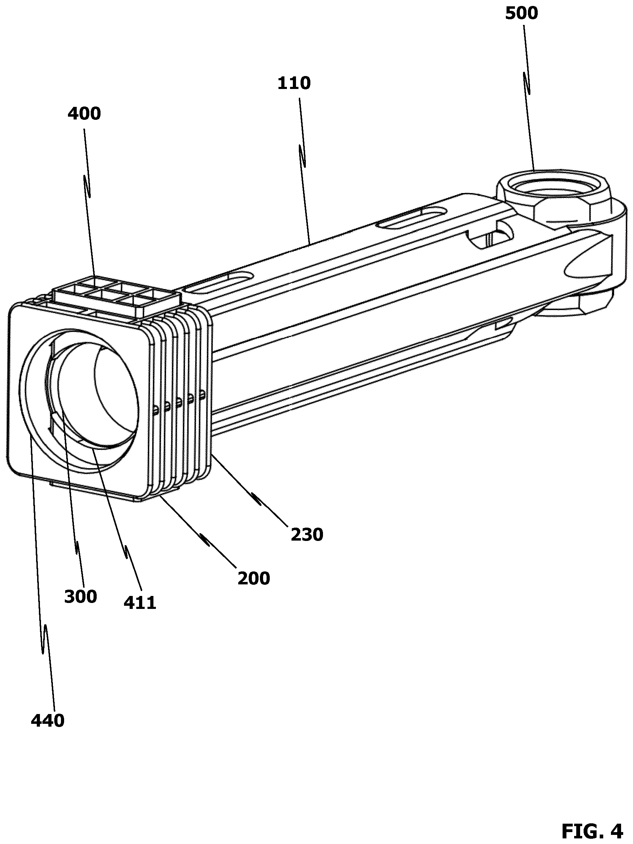

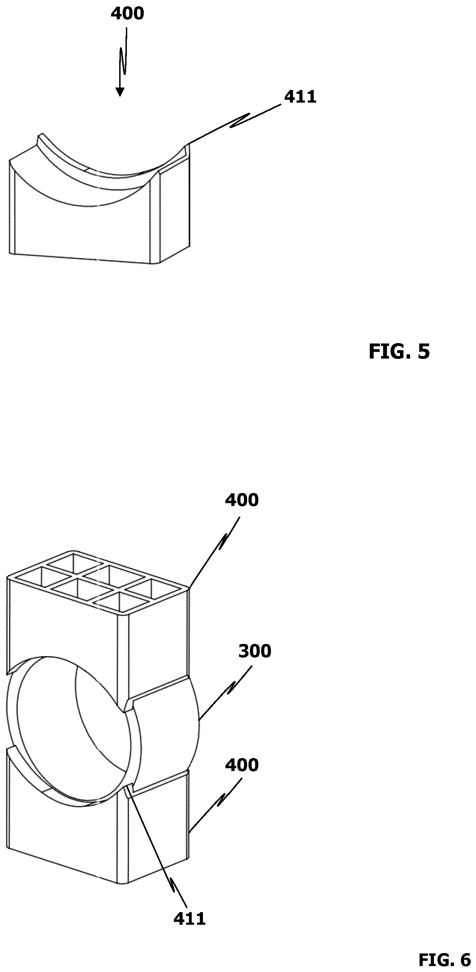

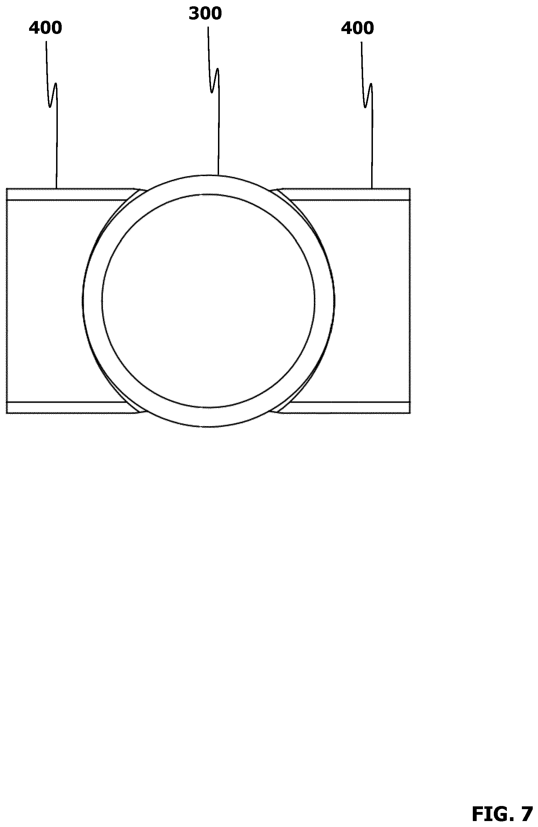

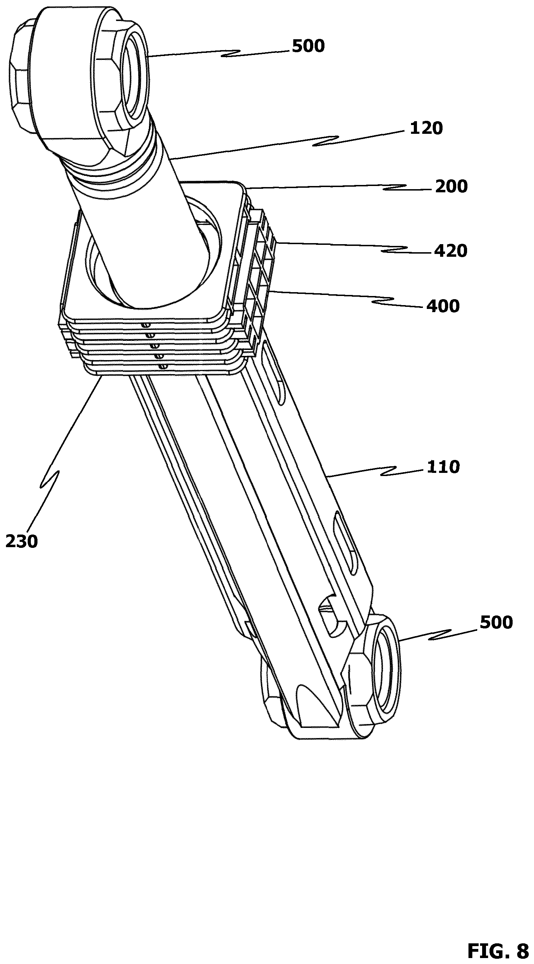

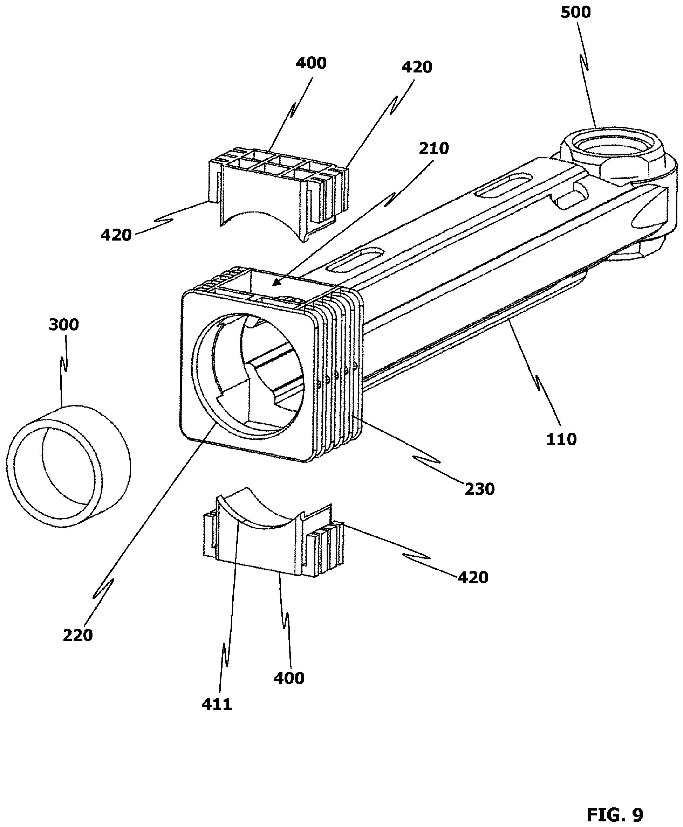

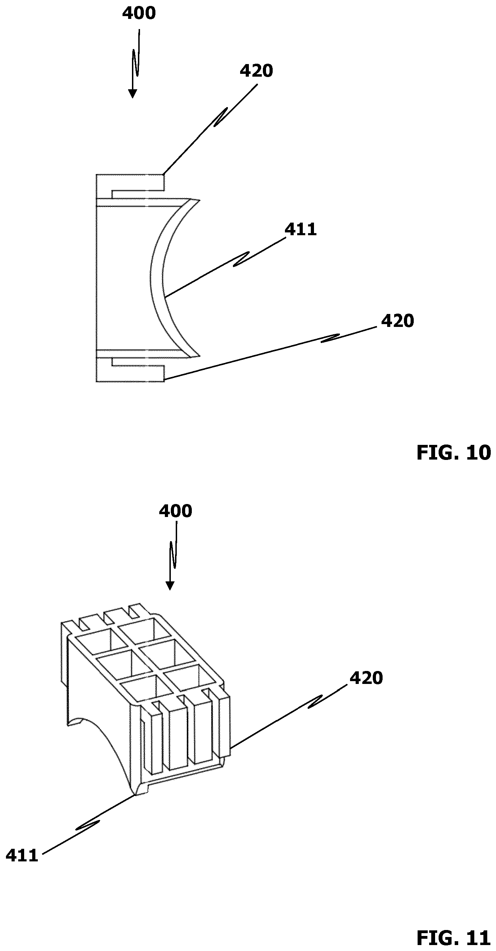

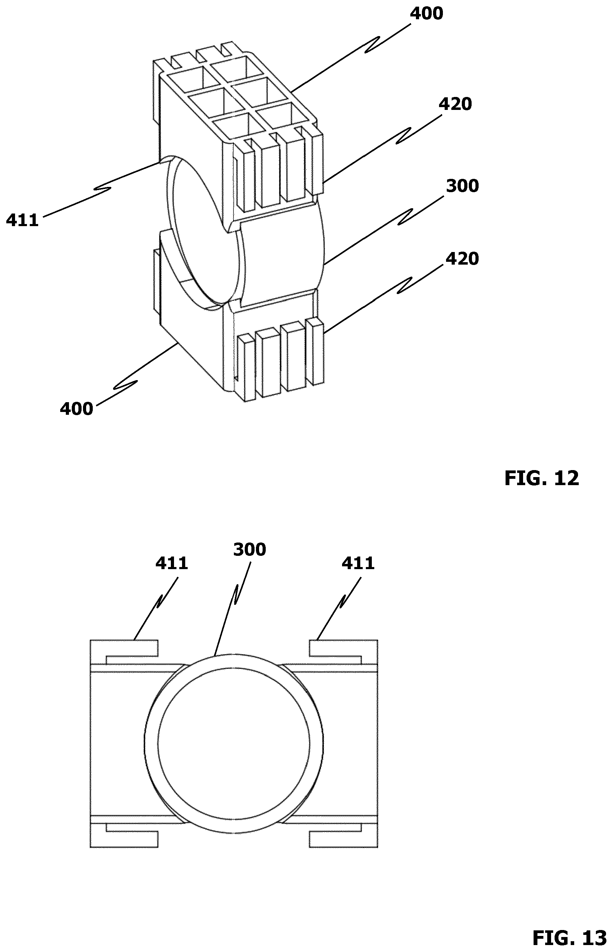

In one embodiment of the invention, the pressure elements (400) have an upper retainer protrusion (411) extending though a part of an upper surface of the friction member (300). This embodiment is useful especially for the top loaded the friction damper (100). The movement of the friction member (300) is securely restricted along the damping rod axis (Y) by the upper retainer protrusion (411). The upper surface of the friction member (300) is an outermost surface of the friction member (300) according to the hollow body (110). The upper retainer protrusion (411) provides that the friction member (300) is secured inside the seat (200), between the hollow body (110) and the retainer protrusion (410) or in between a base of the seat (200) and the retainer protrusion (410) (see Fig. 2-19). In this embodiment, from the lower surface, the friction member (300) may abut on to the end of the hollow body (110) or the base of the seat (200). From the upper surface, the friction member (300) abuts onto upper retainer protrusion (411).

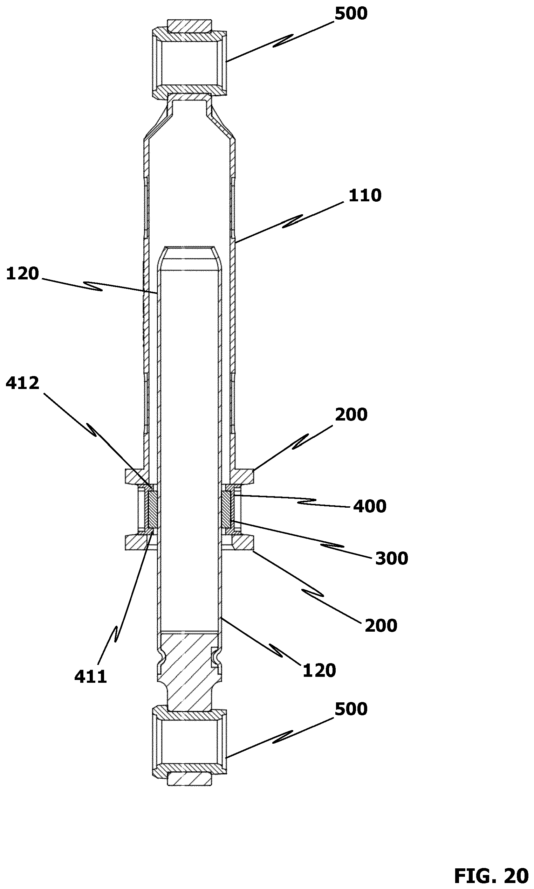

In one embodiment of the invention, the pressure elements (400) have a lower retainer protrusion (412) extending though a part of a lower surface of the friction member (300). The lower surface of the friction member (300) could be defined as a closest surface of the friction member (300) to the hollow body (110). This embodiment is useful especially for the side loaded friction damper (100). The lower surface of the friction member (300) is a closest outer surface of the friction member (300) according to the hollow body (110). The lower retainer protrusion (412) provides that the friction member (300) is secured inside the seat (200), between the upper retainer protrusion (411) and the lower retainer protrusion (412) (see Fig. 20-25). In this embodiment, from the lower surface, the friction member (300) may abut on to the lower retainer protrusion (412). From the upper surface, the friction member (300) abuts onto upper retainer protrusion (411.

In one embodiment of the invention, the pressure elements (400) have a body size suitable for being fixed into the inlet (210) through snug fitting. In this embodiment, the pressure element (400) is slidable inside the inlet (210). The body size of the pressure element (400) providing the snug fitting into the inlet (210) serves the dual purpose of enabling stepless/continuous position adjustment of each pressure element (400) within the inlet (210) [also means: distance adjustment between the pressure elements (400)] and of allowing for automatic self-locking by snug fitting at the adjusted/selected distance between the pressure elements (400) [also means: at the adjusted position of each pressure element (400)].

In embodiments of the invention, the friction member (300) could also be secured inside the seat (200) by gluing the friction member (300) to the seat (200) or the pressure elements (400). Alternatively, it is also be secured by a rivet, bolt, nail, screw or any other mechanical fastening means.

In one embodiment of the invention, the pressure elements comprise an external fastening means for fixing the pressure elements (400) to the seat (200) from an outer surface the seat (200). In this embodiment, the pressure element (400) is securely fixed into the seat (200) at its adjusted position [also means: at the adjusted distance between the pressure elements (400)].

In one embodiment of the invention, the seat (200) has heat transfer fins (230) for cooling the friction member (300). Fins (230) dissipates the heat generated via the friction between the friction member (300) and the damping rod (120). Decreasing the temperature of the friction member (300) significantly prolongs the service life of the friction member (300). In an alternative of this embodiment, the external fastening (210) means comprises plurality of cantilevers (420). The cantilevers (420) can be engaged with spaces between the fins (230). This engagement facilitates to fix the pressure element (400) at its adjusted position within the inlet (210). This embodiment provides that there is no need for a means on the outer surface the seat (200) to engage with the external fastening means. As a result, economical and fast producible seats (200) can be realized.

In one embodiment of the invention, the pressure elements (400) comprise an internal fastening means for fixing the pressure elements (400) each other. This embodiment is useful especially for the side loaded the friction damper (100) and significantly important such that the distance between the pressure elements (400) can be adjusted externally, outside of the seat (200). This being adjustable externally allows for a high level of precision in changing the distance between the pressure elements (400). It also allows for measuring the exerted pressure force on the friction member (300) by a pressure gauge. In this embodiment, the friction member (300) is place between the pressure elements (400) outside of the seat (200). The distance between the pressure elements (400) is be adjusted and the pressure elements (400) are fixed together at the adjusted distance. At this position, the friction member (300) with its adjusted friction force is secured between the pressure elements (400). With this combination of the friction member (300) together with the pressure elements (400) is slid into the inlets (210). Lastly, the damping rod (120) is placed into the hollow body (110). In this embodiment, the pressure elements (400) may comprise the upper retainer protrusion (411) [see Fig. 14-19]. Alternatively, the pressure elements (400) may comprise both the upper retainer protrusion (411) and lower retainer protrusion (412) [see Fig. 20-25].

In this alternative embodiment, the friction member (300) is encompassed by the pressure elements (400) in all directions resulting in a fully secured friction member (300) between the pressure elements (400).

In one embodiment of the invention, the internal fastening means comprise at least one settling pin (430) and at least one pin hole (440) for fixing one pressure element (400) to another at a selected distance between each other. A settling pin (430) of one pressure elements (400) is inserted into a corresponding pin hole (440) of another pressure elements (400). As the settling pin (430) is inserted deeper into the corresponding pin hole (440), the selected distance between the engaged pressure elements (400) decreases. The selected distance defines the exerted pressure of the pressure element (400) to the friction member (300).

In one embodiment of the invention, the pressure element (400) comprises at least one force application hole (450) which is positioned on an opposite surface of a surface of the pressure element (400) where the settling pin (430) and/or the pin hole (440) is present. This embodiment allows for the gradual insertion of the settling pin (430) into corresponding pin hole (440). A force can be directly applied to the positioning pin (430) or the socket (440) from inside of the corresponding force application hole (450). The force application hole (450) may provide installing hole for a pressuring machine in order to apply pressure to the pressure element (400). The pressuring machine may also comprise a pressure gauge providing a precise pressure application to the pressure element (400) such that facilitating a precise distance adjustment between the pressure element (400) and friction force on the damping rod (120).

In one embodiment of the invention, the friction member (300) has a form of a ring and the pressure elements (400) have a concave inner, such as C shaped, surface contacting the friction member (300) wherein the inner contour of contour of the concave inner surface, such as inner surface of the C shape, is match with the convex surface of the friction member (300). In this embodiment, the pressure elements (400) exert an even pressure to ring formed the friction member (300) resulting in a prolonged friction member (300). Additionally, the friction member (300) is more securely positioned between the pressure elements (400).

## Claims

1. A friction damper (100) for washing or drying machines **comprising**;
- a tubular hollow body (110) and a damping rod (120) arranged coaxially with respect to one another for moving along each other telescopically, wherein the damping rod (120) has an outer diameter less than an inner diameter of the hollow body (110);
- wherein the hollow body (110) comprises a seat (200) for housing a friction member (300) to which the damping rod (120) is slidably coupled for generating a friction force onto the damping rod (120);
- wherein
the seat (200) has at least two opposing inlets (210) and each inlet (210) is for receiving at least one pressure element (400); and the friction member (300) is adapted for being positioned between the pressure element (400);
**characterised in that**
- the pressure elements (400) are slidable and fixable at various positions within the inlet (210) and exert pressure to the friction member (300) at an adjustable level according to an adjustable distance between the pressure elements (400).

2. The friction damper (100) for washing or drying machines according claim 1, wherein inlets (210) are accessible from an outside surface of the seat (200).

3. The friction damper (100) for washing or drying machines according to any of the preceding claims, wherein the seat (200) comprises a rod opening (220) for receiving the damping rod (120) has a diameter less than an outer diameter of the friction member (300).

4. The friction damper (100) for washing or drying machines according to any of the preceding claims, wherein the pressure elements (400) have an upper retainer protrusion (411) extending though a part of an upper surface of the friction member (300) providing that the friction member (300) is secured inside the seat (200), between the hollow body (110) and the retainer protrusion (410).

5. The friction damper (100) for washing or drying machines according claim 4, wherein the pressure elements (400) have a lower retainer protrusion (412) extending though a part of a lower surface of the friction member (300) providing that the friction member (300) is secured inside the seat (200), between the upper retainer protrusion (411) and the lower retainer protrusion (412).

6. The friction damper (100) for washing or drying machines according to any of the preceding claims, wherein the pressure elements (400) have a body size suitable for being fixed into the inlet (210) through snug fitting.

7. The friction damper (100) for washing or drying machines according to any of the preceding claims, wherein the pressure elements (400) comprise an external fastening means for fixing the pressure elements (400) to the seat (200) from an outer surface the seat (200).

8. The friction damper (100) for washing or drying machines according to any of the preceding claims, wherein the seat (200) has heat transfer fins (230) for cooling the friction member (300).

9. The friction damper (100) for washing or drying machines according to claim 8 depending on claim 7, wherein the external fastening means comprises plurality of cantilevers (420) engaging with spaces between the fins (230).

10. The friction damper (100) for washing or drying machines according to any of the preceding claims, wherein the pressure elements (400) comprise an internal fastening means for fixing the pressure elements (400) each other.

11. The friction damper (100) for washing or drying machines according to claim 10, wherein the internal fastening means comprise at least one settling pin (430) and at least one pin hole (440) for fixing one pressure element (400) to another at a selected distance between each other.

12. The friction damper (100) for washing or drying machines according claim 11, wherein the pressure element (400) comprises at least one force application hole (450) which is positioned on an opposite surface of a surface of the pressure element (400) where the settling pin (430) and/or the pin hole (440) is present.

13. The friction damper (100) for washing or drying machines according to any of the preceding claims, wherein the friction member (300) has a form of a ring and the pressure elements (400) have a concave inner surface contacting the friction member (300) wherein the contour of the concave inner surface is match with the convex surface of the friction member (300).

## Patentansprüche

1. Reibungsdämpfer (100) für Wasch- oder Trocknungsmaschinen **umfassend**;
- einen röhrenförmigen Hohlkörper (110) und eine Dämpfungsstange (120) die koaxial zueinander angeordnet sind um sich teleskopartig entlang einander zu bewegen, wobei die Dämpfungsstange (120) einen Außendurchmesser aufweist, der kleiner ist als der Innendurchmesser des Hohlkörpers (110);
- wobei der Hohlkörper (110) einen Sitz (200) zur Aufnahme eines Reibungselements (300) umfasst mit dem die Dämpfungsstange (120) verschiebbar verbunden ist um eine Reibungskraft auf die Dämpfungsstange (120) auszuüben;
- wobei der Sitz (200) mindestens zwei gegenüberliegende Einlässe (210) aufweist und jeder Einlass (210) zur Aufnahme mindestens eines Druckelements (400) dient; und das Reibungselement (300) so ausgelegt ist, dass es zwischen den Druckelementen (400) positioniert werden kann;
**dadurch gekennzeichnet, dass**
- die Druckelemente (400) an verschiedenen Positionen innerhalb des Einlasses (210) verschiebbar und fixierbar sind und einen Druck auf das Reibungselement (300) in einer einstellbaren Höhe entsprechend einem einstellbaren Abstand zwischen den Druckelementen (400) ausüben.

2. Reibungsdämpfer (100) für Wasch- oder Trocknungsmaschinen gemäß Anspruch 1, wobei die Einlässe (210) von einer Außenfläche des Sitzes (200) aus zugänglich sind.

3. Reibungsdämpfer (100) für Wasch- oder Trocknungsmaschinen gemäß einem der vorstehenden Ansprüche, wobei der Sitz (200) eine Stangenöffnung (220) zur Aufnahme der Dämpfungsstange (120) aufweist, deren Durchmesser kleiner ist als der Außendurchmesser des Reibungselements (300).

4. Reibungsdämpfer (100) für Wasch- oder Trocknungsmaschinen gemäß einem der vorstehenden Ansprüche, wobei die Druckelemente (400) einen oberen Haltevorsprung (411) aufweisen der sich durch einen Teil einer Oberseite des Reibungselements (300) erstreckt, wodurch das Reibungselement (300) innerhalb des Sitzes (200) zwischen dem Hohlkörper (110) und dem Haltevorsprung (410) befestigt ist.

5. Reibungsdämpfer (100) für Wasch- oder Trocknungsmaschinen gemäß Anspruch 4, wobei die Druckelemente (400) einen unteren Haltevorsprung (412) aufweisen der sich durch einen Teil einer unteren Fläche des Reibungselements (300) erstreckt, vorausgesetzt, dass das Reibungselement (300) innerhalb des Sitzes (200) befestigt ist, zwischen dem oberen Haltevorsprung (411) und dem unteren Haltevorsprung (412).

6. Reibungsdämpfer (100) für Wasch- oder Trocknungsmaschinen gemäß einem der vorstehenden Ansprüche, wobei die Druckelemente (400) eine Körpergröße aufweisen die geeignet ist um durch passgenauen Sitz in dem Einlass (210) befestigt zu werden.

7. Reibungsdämpfer (100) für Wasch- oder Trocknungsmaschinen gemäß einem der vorstehenden Ansprüche, wobei die Druckelemente (400) eine äußere Befestigungsvorrichtung zum Befestigen der Druckelemente (400) an dem Sitz (200) von einer Außenfläche des Sitzes (200) aus umfassen.

8. Reibungsdämpfer (100) für Wasch- oder Trocknungsmaschinen gemäß einem der vorstehenden Ansprüche, wobei der Sitz (200) Wärmeübertragungsrippen (230) zum Kühlen des Reibungselements (300) aufweist.

9. Reibungsdämpfer (100) für Wasch- oder Trocknungsmaschinen gemäß Anspruch 8 in Abhängigkeit von Anspruch 7, wobei die äußere Befestigungsvorrichtung mehrere Ausleger (420) umfasst die in Zwischenräume zwischen den Rippen (230) eingreifen.

10. Reibungsdämpfer (100) für Wasch- oder Trocknungsmaschinen gemäß einem der vorstehenden Ansprüche, wobei die Druckelemente (400) eine innere Befestigungsvorrichtung zum Befestigen der Druckelemente (400) aneinander umfassen.

11. Reibungsdämpfer (100) für Wasch- oder Trocknungsmaschinen gemäß Anspruch 10, wobei die internen Befestigungsmittel mindestens einen Setzstift (430) und mindestens ein Stiftloch (440) umfassen, um ein Druckelement (400) in einem ausgewählten Abstand zueinander an einem anderen zu befestigen.

12. Reibungsdämpfer (100) für Wasch- oder Trocknungsmaschinen gemäß Anspruch 11, wobei das Druckelement (400) mindestens ein Kraftangriffsloch (450) umfasst, das auf einer gegenüberliegenden Fläche einer Fläche des Druckelements (400) positioniert ist wo sich der Setzstift (430) und/oder das Stiftloch (440) befindet.

13. Reibungsdämpfer (100) für Wasch- oder Trocknungsmaschinen gemäß einem der vorstehenden Ansprüche, wobei das Reibungselement (300) die Form eines Rings hat und die Druckelemente (400) eine konkave Innenfläche aufweisen die mit dem Reibungselement (300) in Kontakt steht, wobei die Kontur der konkaven Innenfläche mit der konvexen Oberfläche des Reibungselements (300) übereinstimmt.

## Revendications

1. - Amortisseur à friction (100) pour lave-linges ou sèche-linges **comprenant** :
- un corps creux tubulaire (110) et une tige d'amortissement (120) disposés de manière coaxiale l'un par rapport à l'autre pour se déplacer l'un le long de l'autre de manière télescopique, la tige d'amortissement (120) ayant un diamètre externe inférieur à un diamètre interne du corps creux (110) ;
- dans lequel le corps creux (110) comprend un siège (200) pour loger un élément de friction (300) auquel la tige d'amortissement (120) est couplée de manière coulissante pour générer une force de friction sur la tige d'amortissement (120) ;
- dans lequel le siège (200) a au moins deux entrées opposées (210) et chaque entrée (210) est destinée à recevoir au moins un élément de pression (400) ; et l'élément de friction (300) est apte à être positionné entre les éléments de pression (400) ;
**caractérisé par le fait que** :
- les éléments de pression (400) sont aptes à coulisser et à être fixés à divers emplacements à l'intérieur de l'entrée (210) et exercent une pression sur l'élément de friction (300) à un niveau réglable en fonction d'une distance réglable entre les éléments de pression (400).

2. - Amortisseur à friction (100) pour lave-linges ou sèche-linges, selon la revendication 1, dans lequel des entrées (210) sont accessibles à partir d'une surface extérieure du siège (200).

3. - Amortisseur à friction (100) pour lave-linges ou sèche-linges, selon l'une quelconque des revendications précédentes, dans lequel le siège (200) comprend une ouverture de tige (220) pour recevoir la tige d'amortissement (120) dont le diamètre est inférieur à un diamètre externe de l'élément de friction (300).

4. - Amortisseur à friction (100) pour lave-linges ou sèche-linges, selon l'une quelconque des revendications précédentes, dans lequel les éléments de pression (400) ont une saillie de retenue supérieure (411) s'étendant sur une partie d'une surface supérieure de l'élément de friction (300), à condition que l'élément de friction (300) soit fixé à l'intérieur du siège (200), entre le corps creux (110) et la saillie de retenue (410).

5. - Amortisseur à friction (100) pour lave-linges ou sèche-linges, selon la revendication 4, dans lequel les éléments de pression (400) ont une saillie de retenue inférieure (412) s'étendant sur une partie d'une surface inférieure de l'élément de friction (300), à condition que l'élément de friction (300) soit fixé à l'intérieur du siège (200), entre la saillie de retenue supérieure (411) et la saillie de retenue inférieure (412).

6. - Amortisseur à friction (100) pour lave-linges ou sèche-linges, selon l'une quelconque des revendications précédentes, dans lequel les éléments de pression (400) ont une taille de corps appropriée pour être fixés dans l'entrée (210) par ajustement serré.

7. - Amortisseur à friction (100) pour lave-linges ou sèche-linges, selon l'une quelconque des revendications précédentes, dans lequel les éléments de pression (400) comprennent un moyen de fixation externe pour fixer les éléments de pression (400) au siège (200) à partir d'une surface externe du siège (200).

8. - Amortisseur à friction (100) pour lave-linges ou sèche-linges, selon l'une quelconque des revendications précédentes, dans lequel le siège (200) a des ailettes de transfert de chaleur (230) pour refroidir l'élément de friction (300).

9. - Amortisseur à friction (100) pour lave-linges ou sèche-linges, selon la revendication 8 en dépendance de la revendication 7, dans lequel le moyen de fixation externe comprend une pluralité d'éléments en porte-à-faux (420) s'engageant dans des espaces entre les ailettes (230) .

10. - Amortisseur à friction (100) pour lave-linges ou sèche-linges, selon l'une quelconque des revendications précédentes, dans lequel les éléments de pression (400) comprennent un moyen de fixation interne pour fixer les éléments de pression (400) les uns aux autres.

11. - Amortisseur à friction (100) pour lave-linges ou sèche-linges, selon la revendication 10, dans lequel le moyen de fixation interne comprend au moins une goupille de réglage (430) et au moins un trou de goupille (440) pour fixer un élément de pression (400) à un autre à une distance sélectionnée entre eux.

12. - Amortisseur à friction (100) pour lave-linges ou sèche-linges, selon la revendication 11, dans lequel l'élément de pression (400) comprend au moins un trou d'application de force (450) qui est positionné sur une surface opposée à une surface de l'élément de pression (400) où la goupille de réglage (430) et/ou le trou de goupille (440) sont présents.

13. - Amortisseur à friction (100) pour lave-linges ou sèche-linges, selon l'une quelconque des revendications précédentes, dans lequel l'élément de friction (300) a la forme d'une bague et les éléments de pression (400) ont une surface interne concave en contact avec l'élément de friction (300), le contour de la surface interne concave correspondant à la surface convexe de l'élément de friction (300).
